# EUROPÄISCHE PATENTSCHRIFT

(11) **EP 2 100 411 B1**
(45) Veröffentlichungstag und Bekanntmachung des Hinweises auf die Patenterteilung: **09.01.2013**
(21) Anmeldenummer: 07846867.5
(22) Anmeldetag: 29.11.2007
(51) Int. Cl.: H04L 12/40, H04L 29/06, H04L 12/24, G05B 19/042, G05B 19/05

(54) **VERFAHREN ZUM BETREIBEN EINES ETHERNETFÄHIGEN FELDBUSGERÄTES**
METHOD FOR THE OPERATION OF AN ETHERNET-COMPATIBLE FIELD BUS DEVICE
PROCÉDÉ PERMETTANT DE FAIRE FONCTIONNER UN DISPOSITIF À BUS DE TERRAIN COMPATIBLE AVEC ETHERNET

(30) Priorität: 01.12.2006 DE 102006057133
(43) Veröffentlichungstag der Anmeldung: 16.09.2009
(73) Patentinhaber: Phoenix Contact GmbH & Co. KG, 32825 Blomberg (DE)
(72) Erfinder: KALHOFF, Johannes, 32825 Blomberg (DE)
(74) Vertreter: Kampfenkel, Klaus
(86) Internationale Anmeldenummer: PCT/EP2007/010339
(87) Internationale Veröffentlichungsnummer: WO 2008/064885

(56) Entgegenhaltungen:
- DE-A1- 10 036 686
- US-A- 5 699 350
- US-A- 6 009 274
- US-A1- 2003 061 412
- US-A1- 2004 133 689
- US-A1- 2004 267 950
- US-A1- 2006 206 218
- US-B2- 7 093 244

## Beschreibung

Die Erfindung betrifft ein Verfahren zum Betreiben eines ethernetfähigen Feldbusgerätes, welches mit einem ethernetbasierten Kommunikationswerk, über das Daten unter Verwendung eines vorbestimmten Kommunikations-Protokollstapels übertragen werden, verbunden ist.

In einem Automatisierungssystemen kommunizieren Feldbusgeräte und übergeordnete Steuereinrichtungen über ein Netzwerk, zum Beispiel über ein Ethernet miteinander. Hierzu wird in der Regel ein standardisiertes Kommunikationsprotokoll verwendet, um Daten zwischen den Feldbusgeräten und der überlagerten Steuereinrichtung austauschen zu können. Da auf Feldbusgeräten in der Regel proprietäre Kommunikationsprotokolle installiert sind, muss vor der Implementierung eines Automatisierungssystems entschieden werden, welches Kommunikationsprotokoll und somit welche Feldbusgeräte von welchen Herstellern zum Einsatz kommen sollen.

Aus US 2006/206218 A1 ist ein automatisches Steuersystem bekannt, welches Feldgeräte wie zum Beispiel Sensoren und Aktoren und ein als Link Master bezeichnetes Feldgerät enthält, wobei der Link Master als Netzwerksteuerung fungieren kann. Das aus US 2006/206218 A1 bekannte Steuerungssystem dient dazu, Endteilnehmer-konfigurierbare Funktionsblöcke, sogenannte "Flexible Function Blocks", bereitzustellen, mit denen kundenseitige Steuersoftware gewartet werden kann, wobei es sich bei den flexiblen Funktionsblöcken um Endteilnehmer-konfigurierte Parameter und Endteilnehmer-konfigurierte Algorithmen handelt.

In DE 100 36 686 A1 wird beschrieben, unter Verwendung des SNMP-Protokolls von einem Netzwartungsrechner zu einem Netzelement Wartungsnachrichten zu übertragen, wobei die Wartungsnachrichten Konfigurationsdaten umfassen, die dazu dienen, einen bereits installierten Kommunikations-Protokollstapel zu konfigurieren, wobei einzelne Protokollschichten oder Verknüpfungen zwischen Protokollschichten hinzugefügt oder entfernt werden, und wobei das Konfigurationsverfahren jeweils von dem Hersteller des Programms zur Ausführung der jeweiligen Protokollschicht vorgegeben wird.

Der vorliegenden Erfindung liegt die Aufgabe zugrunde, ein Verfahren bereitzustellen, mit welchem ethernetbasierte Kommunikationssysteme flexibel und mit geringem Aufwand aufgebaut werden können. Insbesondere ist es Aufgabe der vorliegenden Erfindung, herstellerunabhängige Feldbusgeräte an unterschiedlichen ethernetbasierten Kommunikationssystemen betreiben zu können.

Ein Kerngedanke der Erfindung ist darin zu sehen, ethernetfähige Feldbusgeräte von einer zentralen Stelle aus automatisiert an ein beliebiges ethernetbasiertes Kommunikationssystem anzupassen, so dass Feldbusgeräte unterschiedlicher Hersteller untereinander und/oder mit einer überlagerten Steuereinrichtung Nutzdaten über ein ethernetbasiertes Kommunikationsnetzwerk Nutzdaten austauschen können.

Das oben genannte technische Problem wird durch ein Verfahren zum Betreiben eines ethernetfähigen Feldbusgerätes gemäß Anspruchs 1 gelöst, welches mit einem ethernetbasierten Kommunikationsnetzwerk, über das Daten unter Verwendung eines vorbestimmten Kommunikations-Protokollstapels übertragen werden, verbunden ist.

Zunächst wird zwischen dem ethernetfähigen Feldbusgerät und einer mit dem Kommunikationsnetzwerk verbundenen Verwaltungseinrichtung unter Verwendung eines ethernetbasierten Netzwerkverwaltungs-Protokolls ein Netzwerkverwaltungskanal aufgebaut. Das Netzwerkverwaltungs-Protokoll kann das Simple Network Management Protokoll, kurz auch SNMP genannt, sein. Dieses ethernetbasierte Netzwerkverwaltungs-Protokoll ist sowohl im Feldbusgerät als auch in der Verwaltungseinrichtung installiert. Um Nutzdaten übertragen zu können, wird nunmehr der Kommunikations-Protokollstapel unter Verwendung des vorbestimmten Netzwerkverwaltungs-Protokolls von der Verwaltungseinrichtung zum ethernetfähigen Feldbusgerät übertragen. Der vorbestimmte Kommunikations-Protokollstapel wird in dem ethernetfähigen Feldbusgerät gespeichert. Ein im Feldbusgerät implementierete Steuereinrichtung kann dann unter Verwendung des Kommunikations-Protokollstapel eine Nutzdatenübertragung über das ethernetbasierte Kommunikationsnetzwerk steuern.

Angemerkt sei an dieser Stelle, dass es sich bei dem Kommunikations-Protokollstapel um einen Ethernet-Protokollstapel, beispielsweise das Profinet, handeln kann, welcher den Ethernet/IP-Stapel, TCP/IP-Protokolle oder den AppleTalk-Protokollstapel enthält.

Vorteilhafte Weiterbildungen sind Gegenstand der Unteransprüche.

Da das ethernetbasierte Feldbusgerät zunächst aufgrund des fehlenden vorbestimmten Kommunikations-Protokollstapels nicht in das Kommunikationsnetz eingebunden werden kann, sendet das ethernetbasierte Feldbusgerät nach der Verbindung mit dem Kommunikationsnetz ein Anforderungssignal über den Netzwerkverwaltungskanal zur Verwaltungseinrichtung, um die Übertragung des vorbestimmten Kommunikations-Protokollstapels anzufordern. Die Verwaltungseinrichtung übertragt dann unter Ansprechen auf das Anforderungssignal den vorbestimmten Kommunikations-Protokollstapel zum ethernetbasierten Feldbusgerät.

Um Kanalkapazität im Kommunikationsnetz einzusparen, wird vor Beginn einer Nutzdatenübertragung der Netzwerkverwaltungskanal wieder abgebaut.

Um den Kommunikations-Protokollstapel von der Verwaltungseinrichtung zum Feldbusgerät übertragen zu können, wird dieser auf Rahmen oder Blöcke gemäß dem Netzwerkverwaltungs-Protokoll verteilt und in IP-Paketen zum ethernetfähigen Feldbusgerät übertragen.

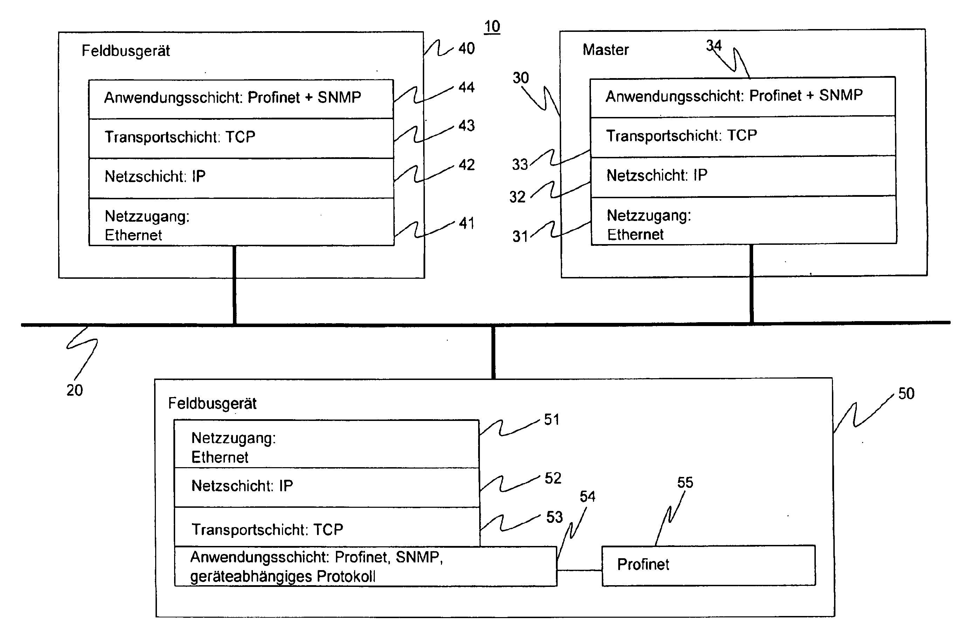

Die Erfindung wird nachfolgend anhand eines Ausführungsbeispiels in Verbindung mit einer einzigen Figur näher erläutert.

In der Figur ist ein beispielhaftes Automatisierungssystem 10 dargestellt, welches ein ethernetbasiertes Kommunikationsnetzwerk 20 aufweist, an das eine übergeordnete Steuereinrichtung 30, nachfolgend auch Master genannt, angeschlossen ist. In dem Master 30 ist eine Netzwerkmangement-Funktionalität zum Beispiel das SNMP in der Anwendungsschicht 34 sowie eine ethernettaugliche physikalische Schnittstelle 31 implementiert, über die sie am Kommunikationsnetz 20 angeschlossen ist. Die übergeordneten Steuereinrichtung 30 kann über das SNMP-Protokoll unter anderem Konfigurations- und Parametrierungsdaten über das Kommunikationsnetz 20 übertragen und empfangen. Darüber hinaus ist in der Anwendungsschicht 34 des Masters 30 im vorliegenden Beispiel ein vorbestimmter Kommunikations-Protokollstapel installiert, über den Nutzdaten über das Kommunikationsnetzwerk 20 übertragen und empfangen werden können. Im vorliegenden Beispiel ist als Kommunikations-Protokollstapel das Profinet-Protokoll im Master 30 installiert worden. Ferner ist im Master 30 in an sich bekannter Weise das TCP/IP-Protokoll in der Transportschicht 33 bzw. der Netzschicht 32 installiert.

Weiterhin ist an dem Kommunikationsnetzwerk 20 ein Feldbusgerät 40 angeschlossen, welches über eine ethernettaugliche physikalische Schnittstelle 41 mit dem Kommunikationsnetzwerk 20 verbunden ist. Ähnlich der übergeordneten Steuereinrichtung 30 kann das Feldbusgerät 40 eine ethernettauglich Datensicherungsschicht aufweisen. Als Anwendungssoftware ist in dem Feldbusgerät 40 das Profinet als Kommunikations-Protokollstapel und das SNMP-Protokoll als Netzwerkverwaltungs-Protokoll gespeichert.

Die Steuerung des Datenaustauschs über das Kommunikationsnetz erfolgt sowohl bei der übergeordneten Steuereinrichtung 30 als auch beim Feldbusgerät 40 über das TCP/IP-Protokoll. Nutz- oder Anwendungsdaten werden zwischen dem Feldbusgerät 40 und der übergeordneten Steuereinrichtung 30 unter Anwendung des Profinet-Protokolls ausgetauscht.

Angenommen sei nunmehr, dass ein weiteres Feldbusgerät, welches mit Bezugszeichen 50 gekennzeichnet ist, an das Kommunikationsnetzwerk 20 angeschlossen wird. Das Feldbusgerät 50 ist ebenfalls über eine ethernettaugliche physikalische Schnittstelle 51 an das Kommunikationsnetzwerk 20 angeschlossen. Als Transportprotokoll wird wiederum das TCP/IP-Protokoll verwendet, welches in der Transportschicht 53 und in der Netzschicht 52 angeordnet ist. In der Anwendungsschicht 54 des Feldbusgerätes 50 sind als Netzwerkverwaltungs-Protokoll das SNMP-Protokoll sowie ein geräte- oder herstellerabhängiges Kommunikationsprotokoll installiert, das nicht das Profinet ist. Demzufolge kann sich das Feldbusgerät 50 weder an der übergeordneten Steuereinrichtung 30 anmelden noch kann es von dieser als neu hinzugekommenes Feldbusgerät identifiziert werden.

Um das Feldbusgerät 50 in das Automatisierungssystem 10 einbinden zu können, benötigt das Feldbusgerät 50 ebenfalls das Profinet-Protokoll. Demzufolge erzeugt das Feldbusgerät 50 zunächst ein Anforderungssignal, welches unter Steuerung des SNMP-Protokolls, das zur Konfiguration und Parametrierung von ethernetbasierten Geräten verwendet wird, zur übergeordneten Steuereinrichtung 30 übertragen wird. Zusammen mit dem Anforderungssignal werden eine Kennung der übergeordneten Steuereinrichtung 30 und eine Kennung des Feldbusgerätes 50 zur Steueeinrichtung 50 übertragen. Das Anforderungssignal wird zwar ebenfalls vom Feldbusgerät 40 empfangen; aber lediglich die übergeordnete Steuereinrichtung 30 ist derart ausgebildet, dass sie das Anforderungssignal als Aufforderung interpretiert, das Profinet-Protokoll zum Feldbusgerät 50 zu übertragen.

Die übergeordnete Steuereinrichtung 30 packt das zu übertragende Profinet-Protokoll in Rahmen, welche gemäß dem SNMP-Protokoll erzeugt werden, die wiederum in IP-Pakete über das Kommunikationsnetzwerk 20 zum Feldbusgerät 50 übertragen werden. Das in den IP-Paketen empfangene Profinet-Protokoll wird der Anwendungsschicht 54 übergeben, in der das Profinet-Protokoll unter Steuerung des SNMP-Protokolls wiederhergestellt und in einem besonderen Speicher 55 als Kommunikationsprotokoll abgelegt wird. Nach Erhalt des Profinet-Protokolls kann das Feldbusgerät 50 unter Anwendung des SNMP-Protokolls eine Bestätigungsnachricht über den Erhalt und die Installation des Profinet-Protokolls zur übergeordneten Steuereinrichtung 30 übertragen. Alternativ oder zusätzlich kann das Feldbusgerät 50 derart implementiert sein, dass es unter Steuerung des Profinet-Protokolls eine Bestätigungsnachricht erzeugt und zur übergeordneten Steuereinrichtung 30 überträgt. Die übergeordnete Steuereinrichtung 30 ist derart ausgebildet, dass sie am korrekten Empfang der Bestätigungsnachricht erkennen kann, dass das Profinet-Protokoll ordnungsgemäß in dem Feldbusgerät 50 installiert worden ist.

Die übergeordnete Steuereinrichtung 30 kann gemäß einem besonderen Ausführungsbeispiel das Feldbusgerät 40 darüber informieren, dass ein weiteres Feldbusgerät 50 in das Automatisierungssystem 10 eingebunden worden ist. Nunmehr kann zwischen allen am Kommunikationsnetzwerk 20 angeschlossenen Teilnehmern ein Kommunikationsbetrieb unter Verwendung des Profinet-Protokolls stattfinden.

Gemäß einer vorteilhaften Ausführungsform wird das Profinet-Protokoll von der übergeordneten Steuereinrichtung 30 während der Initialisierungsphase des neu hinzu gekommenen Feldbusgerät 50 zu diesem übertragen. Hierzu wird zunächst unter Steuerung des SNMP-Protokolls ein Netzwerkverwaltungskanal zwischen dem Feldbusgerät 50 und der übergeordneten Steuereinrichtung 30 aufgebaut. Das vom Feldbusgerät 50 übertragene Anforderungssignal sowie das von der übergeordneten Steuereinrichtung übertragene Profinet-Protokoll werden dann unter Steuerung des SNMP-Protokolls über den aufgebauten Netzwerkverwaltungskanal übertragen. Am Ende der Initialisierungsphase wird der Netzwerkverwaltungskanal wieder abgebaut und die eigentliche Nutzdatenkommunikation kann beginnen. Der Netzwerkverwaltungskanal, der auch als Parametrierungskanal oder Konfigurationskanal fungieren kann, kann auch zeitgleich zur Nutzdatenübertragung verwendet werden.

## Patentansprüche

1. Verfahren zum Betreiben eines ethernetfähigen Feldbusgerätes (50) innerhalb eines Automatisierungssystems, welches mit einem ethernetbasierten Kommunikationsnetzwerk (20), über das Nutzdaten unter Verwendung eines vorbestimmten Kommunikations-Protokollstapel übertragen werden, verbunden ist, mit folgendem Verfahrensschritt:
a) Aufbauen eines Netzwerkverwaltungskanals zwischen dem ethernetfähigen Feldbusgerät (50) und einer mit dem Kommunikationsnetzwerk (20) verbundenen Verwaltungseinrichtung (30) unter Verwendung eines ethernetbasierten Netzwerkverwaltungs-Protokolls, das sowohl in dem Feldbusgerät (50) als auch in der Verwaltungseinrichtung (30) installiert ist, wobei das Verfahren **dadurch gekennzeichnet ist, dass** das Verfahren folgende Verfahrensschritte umfasst:
b) Übertragen des vorfestimmten Kommunikations-Protokollstapels unter Verwendung des ethernetbasierten Netzwerkverwaltungs-Protokolls von der Verwaltungseinrichtung (30) zum ethernetfähigen Feldbusgerät (50);
c) Speichern und Installieren des vorbestimmten Kommunikations-Protokollstapels in dem ethernetfähigen Feldbusgerät (50, 55), wobei der Kommunikations-Protokollstapel eine Nutzdatenübertragung über das ethernetbasierte Kommunikationsnetzwerk (20) steuert.

2. Verfahren nach Anspruch 1,
**dadurch gekennzeichnet, dass**
das ethernetbasierte Feldbusgerät (50) ein Anforderungssignal zum Übertragen des vorbestimmten Kommunikations-Protokollstapels über den Netzwerkverwaltungskanal des Kommunikationsnetzwerks zur Verwaltungseinrichtung (30) überträgt, und dass die Verwaltungseinrichtung (30) unter Ansprechen auf das Anforderungssignal den vorbestimmten Kommunikations-Protokollstapel zum ethernetbasierten Feldbusgerät (50) überträgt.

3. Verfahren nach Anspruch 1 oder 2,
**dadurch gekennzeichnet, dass**
vor Beginn einer Nutzdatenübertragung der Netzwerkverwaltungskanal abgebaut wird.

4. Verfahren nach Anspruch 1, 2 oder 3,
**dadurch gekennzeichnet, dass**
der Kommunikations-Protokollstapel ein Ethernet-Protokollstapel ist, welcher den Ethernet/IP-Stapel, TCP/IP-Protokolle oder den AppleTalk-Protokollstapel enthält.

5. Verfahren nach einem der Ansprüche 1 bis 4,
**dadurch gekennzeichnet, dass**
als Netzwerkverwaltungsprotokoll das SNMP-Protokoll verwendet wird.

6. Verfahren nach einem der Ansprüche 1 bis 5,
**dadurch gekennzeichnet, dass**
der Kommunikations-Protokollstapel auf Rahmen gemäß dem Netzwerkverwaltungsprotokoll verteilt und zum ethernetfähigen Feldbusgerät (50) übertragen wird.

7. Verfahren nach einem der Ansprüche 1 bis 6,
**dadurch gekennzeichnet, dass**
das Kommunikationsnetzwerk (20) einen Ethernetbasierten Feldbus enthält.

## Claims

1. Method for operating an Ethernet-capable field-bus device (50) within an automation system, which field-bus device is connected to an Ethernet-based communications network (20) by means of which user data are transmitted using a predetermined communications protocol stack, having the following method steps:
a) establishing a network management channel between the Ethernet-capable field-bus device (50) and a management device (30) - connected to the communications network (20) - using an Ethernet-based network management protocol which is installed both in the field-bus device (50) and also in the management device (30), wherein the method is **characterised in that** the method comprises the following method steps:
b) transmitting the predetermined communications protocol stack using the Ethernet-based network management protocol from the management device (30) to the Ethernet-capable field-bus device (50);
c) storing and installing the predetermined communications protocol stack in the Ethernet-capable field-bus device (50, 55), wherein the communications protocol stack controls a transmission of user data via the Ethernet-based communications network (20).

2. Method as claimed in Claim 1, **characterised in that** the Ethernet-based field-bus device (50) transmits a request signal for transmitting the predetermined communications protocol stack via the network management channel of the communications network to the management device (30), and **in that** the management device (30) transmits, in response to the request signal, the predetermined communications protocol stack to the Ethernet-based field-bus device (50).

3. Method as claimed in Claim 1 or 2, **characterised in that** the network management channel is dismantled prior to commencement of a transmission of user data.

4. Method as claimed in Claim 1, 2 or 3, **characterised in that** the communications protocol stack is an Ethernet protocol stack which contains the Ethernet/IP stack, TCP/IP protocols, or the AppleTalk protocol stack.

5. Method as claimed in any one of Claims 1 to 4, **characterised in that** the SNMP protocol is used as the network management protocol.

6. Method as claimed in any one of Claims 1 to 5, **characterised in that** the communications protocol stack is divided into frames according to the network management protocol and is transmitted to the Ethernet-capable field-bus device (50).

7. Method as claimed in any one of Claims 1 to 6, **characterised in that** the communications network (20) contains an Ethernet-based field bus.

## Revendications

1. Procédé de mise en service d'un appareil à bus de terrain (50) compatible Ethernet à l'intérieur d'un système d'automatisation, lequel est connecté à un réseau de communication (20) à base Ethernet, au moyen duquel des données utiles sont transmises en recourant à une pile de protocoles de communication prédéfinie, comprenant l'étape suivante :
a) établissement d'un canal de gestion de réseau entre l'appareil à bus de terrain (50) compatible Ethernet et un dispositif de gestion (30) relié au réseau de communication (20) en recourant à un protocole de gestion de réseau à base Ethernet, lequel est installé dans l'appareil à bus de terrain (50) ainsi que dans le dispositif de gestion (30), le procédé étant **caractérisé en ce qu'**il comprend les étapes suivantes :
b) transmission de la pile de protocoles de communication prédéfinie en recourant au protocole de gestion de réseau à base Ethernet, du dispositif de gestion (30) vers l'appareil à bus de terrain (50) compatible Ethernet ;
c) mémorisation et installation de la pile de protocoles de communication prédéfinie dans l'appareil à bus de terrain (50, 55) compatible Ethernet, la pile de protocoles de communication commandant une transmission de données utiles via le réseau de communication (20) à base Ethernet.

2. Procédé selon la revendication 1, **caractérisé en ce que** l'appareil à bus de terrain (50) à base Ethernet transmet un signal de demande de transmission de la pile de protocoles de communication prédéfinie vers le dispositif de gestion (30) via le canal de gestion de réseau du réseau de communication, et **en ce que** le dispositif de gestion (30) transmet la pile de protocoles de communication prédéfinie vers l'appareil à bus de terrain (50) à base Ethernet en réaction au signal de demande.

3. Procédé selon la revendication 1 ou la revendication 2, **caractérisé en ce que** le canal de gestion de réseau est supprimé avant le début d'une transmission de données utiles.

4. Procédé selon la revendication 1, 2 ou 3, **caractérisé en ce que** la pile de protocoles de communication est une pile de protocoles Ethernet, laquelle contient la pile Ethernet/IP, les protocoles TCP/IP ou la pile de protocoles AppleTalk.

5. Procédé selon l'une des revendications 1 à 4, **caractérisé en ce que** le protocole SNMP est exploité comme protocole de gestion de réseau.

6. Procédé selon l'une des revendications 1 à 5, **caractérisé en ce que** la pile de protocoles de communication est divisée en trames conformément au protocole de gestion de réseau et est transmise à l'appareil à bus de terrain (50) compatible Ethernet.

7. Procédé selon l'une des revendications 1 à 6, **caractérisé en ce que** le réseau de communication (20) comprend un bus de terrain à base Ethernet.
